Europäisches Patentamt

European Patent Office

Office européen des brevets

⑱

(11) Publication number: **0 170 033**
**B1**

(12) **EUROPEAN PATENT SPECIFICATION**

(45) Date of publication of patent specification: 26.04.89

(21) Application number: 85107667.9

(22) Date of filing: 21.06.85

(51) Int. Cl.⁴: **G 21 C 7/26**

E R R A T U M

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| and to provide energy core | 5 | 7 | 62 | and to provide emergency core |

Tag der Entscheidung )
über die Berichtigung )
Date of decision on ) 15.06.89
rectification: ) ...................
Date de décision portant )

Ausgabe- und Ver- )
öffentlichungstag: )
Issue and publication ) 02.08.89
date: ) ...................
Date d'edition et de )
publication: )

Patbl.Nr)
                89/:
EPB no:) ......

Bull. no:)

Europäisches Patentamt

European Patent Office

Office européen des brevets

(11) Publication number: **0 170 033**
**B1**

# EUROPEAN PATENT SPECIFICATION

(45) Date of publication of patent specification: **26.04.89**

(51) Int. Cl.⁴: **G 21 C 7/26**

(21) Application number: **85107667.9**

(22) Date of filing: **21.06.85**

(54) **Fluid moderator control system -D2O/H2O.**

(30) Priority: **02.07.84 US 626843**

(43) Date of publication of application:
**05.02.86 Bulletin 86/06**

(45) Publication of the grant of the patent:
**26.04.89 Bulletin 89/17**

(84) Designated Contracting States:
**BE CH FR GB IT LI**

(56) References cited:
**EP-A-0 054 790**
**DE-A-2 005 391**
**DE-B-1 283 408**
**FR-A-1 369 644**
**US-A-4 032 401**

(73) Proprietor: **WESTINGHOUSE ELECTRIC CORPORATION**
**Westinghouse Building Gateway Center**
**Pittsburgh Pennsylvania 15222 (US)**

(72) Inventor: **George, Raymond Anthony**
**112 Center Street**
**East Pittsburgh PA 15112 (US)**
Inventor: **Johnson, Forrest Thomas**
**4625 Norma Drive**
**Pittsburgh Pennsylvania (US)**

(74) Representative: **Casalonga, Axel et al**
**BUREAU D.A. CASALONGA OFFICE JOSSE & PETIT Morassistrasse 8**
**D-8000 München 5 (DE)**

Courier Press, Leamington Spa, England.

## Description

This invention relates in general to the field of spectral shift, pressurized water nuclear reactors and in particular to a control system for a low neutron moderating fluid utilized to achieve the spectral shift.

In conventional, state of the art, pressurized light water nuclear reactors, the reactor core is designed to contain excess reactivity. As the reactor operates, the excess reactivity is very gradually consumed until such point as the reactor core will no longer sustain the nuclear reaction and then the reactor must be refueled. Usually this occurs over the period of a year. It is very advantageous to maximize the time between reactor refuelings (extend the life of the core) since refueling requires complete shutdown of the reactor and is quite time consuming. Extending the life of the core is usually accomplished by providing the core with a significant amount of excess reactivity.

Typically, control over the fission process, or reactivity control, including control necessitated by the excess reactivity is accomplished by varying the amount of neutron-absorbing materials within the core of the reactor. Control rods which contain neutron-absorbing materials and are movable into and out of the core provide one method of controlling the reactivity. Burnable and nonburnable poisons dissolved in the reactor coolant provide another method of reactivity control. As the reactivity decreases, due to reactor operation, the poisons are gradually removed by being burned by reactor operation or are physically removed by a separate system designed for such purpose. Most often, a combination of dissolved poisons and control rods are used to control the reactor and the excess reactivity.

Unfortunately, control with control rods and poisons, absorb neutrons which could otherwise be used in a productive manner. For example, the neutrons produced by the excess reactivity could be used to convert fertile materials within the fuel assemblies to plutonium or fissile uranium which can then be fissioned and contribute to an even further extension of core life. Thus, while the use of control rods and dissolved poisons provided very effective reactor control, their use comprises a relatively inefficient depletion of high cost uranium. It would be, therefore, advantageous to control the excess reactivity, but not suppress the neutrons associated with the excess reactivity, in order to further extend core life or time between refuelings, and to lower fuel costs. It is known that fuel element enrichment can be reduced and the conversion ratio of the producing fissile materials can be increased by employing a "hardened" (nuclear energy) spectrum during the first part of the fuel cycle to reduce excessive reactivity and to increase the conversion of fertile material to fissile material; then employing a "softer" (lower energy) neutron spectrum during the latter part of the fuel cycle to increase reactivity and extend the core life by fissioning the previously generated fissile material. One such method utilizing the above is known as spectral shift control which provides a reactor with an extended core life while reducing the amount of neutron-absorbing material in the reactor core. One example of such method of control comprises a mechanical spectral shift reactor whereby hollow displacer rods are provided within fuel assemblies within the core (which, of course, displace an equal volume of water within the fuel assemblies) and which are mechanically withdrawn or punctured to accomplish water flooding of the available volume. In the early stages of core life, the neutron spectrum is hardened by the displacement of a portion of the water within the core by the displacer rods. The spectrum is later softened by the addition of water within the core by the aforesaid rod withdrawal or puncturing. U.S. Patent 4,432,930 entitled "Spectral Shift Reactor Control Method" and assigned to Westinghouse Electric Corporation, discloses one such mechanical spectral shift reactor.

Another method of achieving a spectral shift is to utilize heavy water or deuterium oxide to replace an equivalent volume of core water during the early stages of core life then to gradually reduce the volume of heavy water and replace it with regular reactor coolant (light water) during the later stages of core life. The less effective moderator, heavy water, allows for less fuel enrichment and a higher ratio of converting fertile material to fissile material which in combination provides for a reduction of fuel costs and an extension of core life.

As can be well appreciated, the success of the spectral shift is, in part, dependent upon a system for controlling the amount of the moderating fluid (including a mixture thereof) supplied to the reactor consistent with the reactivity needs of the reactor at any given time and to provide for removing the fluid from the reactor and for upgrading the same for later use.

It is, therefore, the principal object of the present invention to provide a control system, external of the pressure vessel for supplying a low neutron moderating fluid and/or a mixture of a low neutron moderating fluid and the normal reactor coolant to the reactor pressure vessel.

With this object in view, the present invention resides in a nuclear reactor having a core structure with tubes incorporated therein for receiving different fluids for purposes of spectral shift, a control system for controlling the supply of fluid to said tubes, characterized by means for circulating said fluids to and from said pressure vessel; means for pressurizing the fluids in said circulation means to maintain a predetermined fluid pressure; means for supplying a moderator fluid to said circulation means; means for removing said moderator fluid from said circulation means; and means for varying the concentration of said fluids supplied to said circulation means.

The invention will become more readily apparent from the following description of a preferred embodiment thereof shown, by way of

2

example only, in the following drawings, in which:

Figure 1 is a graph of a fluid moderator concentration versus reactor fuel operating time;

Figure 2 is a graph of boron concentration in the reactor coolant versus reactor fuel operating time;

Figure 3 is a schematic flow diagram of one embodiment of the inventive fluid moderator control system;

Figure 4 is a schematic flow diagram of the inventive control system adapted to provide core heat removal; and

Figure 5 is a schematic flow diagram of another embodiment of the inventive control system.

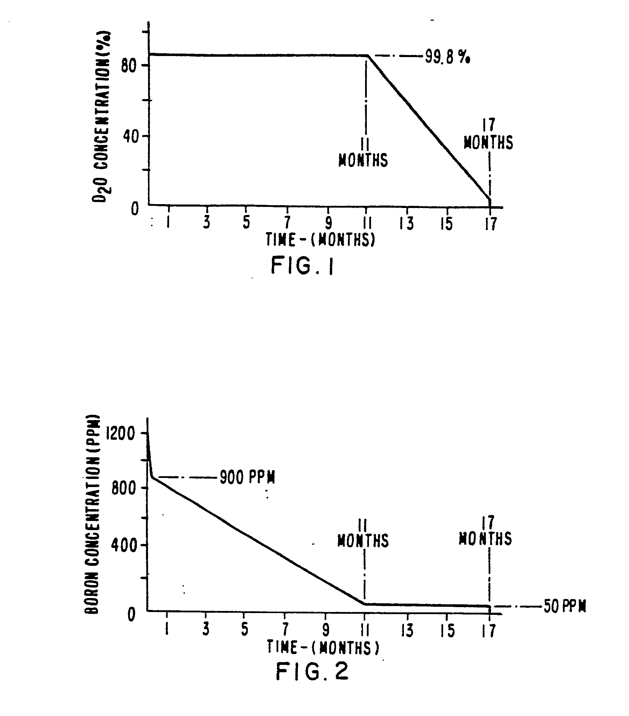

Referring now to the drawings, specifically Figures 1 and 2, there is shown therein the preliminary boron and deuterium oxide requirements as a function of time during an eighteen month fuel cycle, assuming that the reactor is operated at a planned normal and average capacity factor (approximately 80%). Initially, the moderator flow tubes within the core are filled with substantially pure deuterium oxide. This concentration is to be maintained for approximately the first 60—70% of the fuel cycle, which for the example being used corresponds to approximately the first eleven months with one month being reserved for refueling. Figure 2 shows that for the same first eleven month period, the boron concentration is reduced from approximately 900 ppm to 50 ppm to compensate for the depletion of the fissle inventory and the buildup of fission products poisons.

During the last part of the fuel cycle, or from the twelfth to the seventeenth month of an eighteen month fuel cycle, the high purity deuterium oxide concentration may be gradually diluted with light water to approximately 5% by weight to compensate for burnup induced reactivity changes. During this same period of time, the boron concentration may be maintained nearly constant at approximately 50 ppm. Reactivity changes resulting from power, coolant temperature, or xenon concentration may be compensated for by varying some combination of boron concentration (if greater than 100 ppm), coolant temperature and control rod bank insertion.

During the twelfth to the seventeenth month period, the deuterium oxide and light water mixtures which have been removed from the moderator control tubes within the core may be stored and upgraded to high purity deuterium oxide. After cold shutdown, conditions of the reactor are reached but prior to any refueling operations, the residual 5% deuterium oxide present at the end of the fuel cycle would be removed from the core and upgraded to a pure concentration. Prior to startup with new fuel, the moderator tubes would be filled with substantially pure deuterium oxide by, for example, first purging the tubes with an inert gas. The fuel cycle described above would then be repeated.

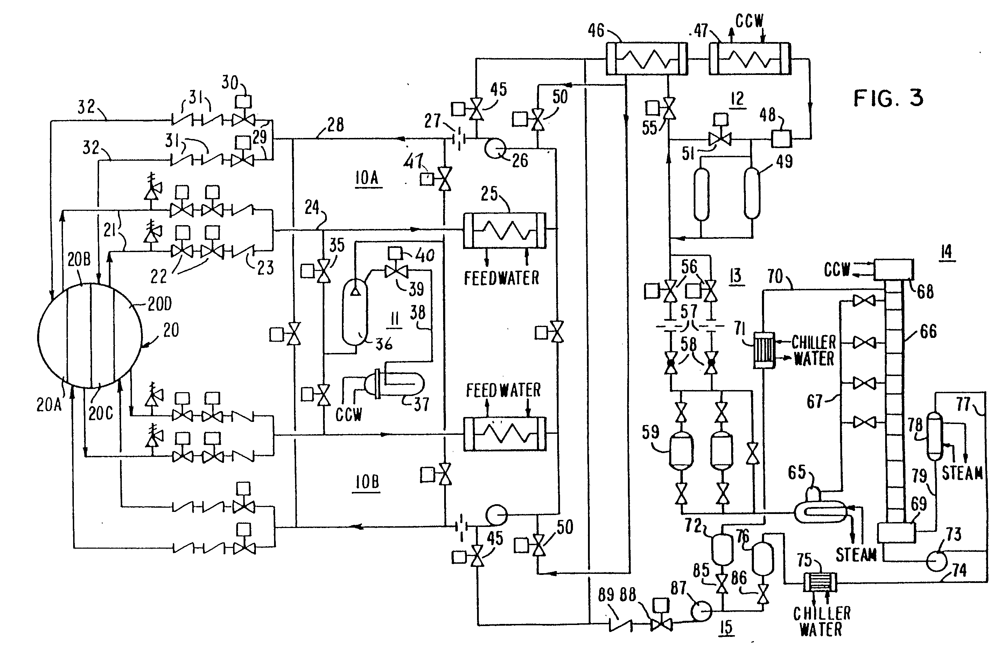

Figure 3 illustrates one embodiment of a fluid moderator control system for effectuating the deuterium oxide concentrations shown in Figure 1. In general, the overall system comprises a primary moderator control system recirculation circuit 10, a pressurizer circuit 11, a purification circuit 12, a letdown circuit 13, an upgrader circuit 14, and a feed/makeup and dilution circuit 15.

The recirculation circuit 10 provides for circulation of deuterium oxide or a mixture of deuterium oxide and reactor coolant to and from the moderator control tubes within the nuclear core. The pressurizer circuit 11 maintains the pressure of the deuterium oxide a specified value below that of the reactor coolant to prevent leakage, if any, into the reactor coolant supply system. The purification circuit 12 provides for continuous purification of a portion of the deuterium oxide flowing within the recirculation circuit 10. The letdown circuit 13 allows for removal and storage of all or a portion of the deuterium oxide within the recirculation circuit 10. The upgrader circuit 14 provides for upgrading the purity of diluted deuterium oxide to essentially pure condition. The feed/makeup and dilution circuit 15 provides the recirculation circuit 10 with its supply of deuterium oxide, makes up for any lost or removed fluid and supplies the recirculation circuit 10 with a desired concentration of a mixture of deuterium oxide and reactor coolant.

The recirculation circuit 10, in the embodiment shown in Figure 1, provides for simultaneously circulating a moderator fluid to and from moderator tubes in each of four core quadrants, 20A, 20B, 20C, and 20D. For maximum reliability, two identical primary circuits 10A and 10B are employed with each servicing two of the four core quadrants. Although the core quadrants are pictorially shown as discrete sections of a round core, each quadrant may contain moderator tubes arranged throughout the entire cross section of the core. In other words, each quadrant may occupy an undivided one-fourth of the core cross section. Since primary circuit 10A is identical to 10B, the ensuing description will apply equally to either of the circuits. The deuterium oxide exits from each of the two core quadrants 20A and 20C and flows through parallel flow lines 21 having a pair of motor-operated block valves 22 and a check valve 23 therein. The exit flow joins together in line 24 and flows through a heat exchanger 25 having steam generator feedwater flowing through the shell side thereof. Heat exchanger 25 is employed to maintain the deuterium oxide at subcooled conditions to preclude boiling of the deuterium oxide primarily within the moderator flow tubes and secondarily within the recirculation circuit 10. Conventional component cooling water may be used within heat exchanger 25 in lieu of the steam generator feedwater. While such alternative cooling water may be simpler from a design and fabrication standpoint, it may result in a non-negligible power loss. Hence, the preferred cooling means is to use the deuterium oxide recirculation circuit 10 energy to heat steam generator feedwater. Upon exiting heat exchanger 25, the deuterium oxide enters the suction port of the main recirculation pump 26 which pumps the low neutron oderating fluid through orifice 27 into line 28 which feeds into parallel flow lines 29. Upon branching into flow lines 29, the $D_2O$ flows through motor-operated block valves 30 and a pair of one-way check valves 31. From check valves 31 the deuterium oxide enters line 32, whereupon it reenters core quadrants 20a and 20c for passage through the moderator flow control tubes within the core. The cycle then repeats itself.

It is to be noted that the recirculation circuit 10, in the event of a reactor trip, provides an emergency high pressure decay heat removal capability in that a continuous recirculation of deuterium oxide through the moderator flow tubes within the core provides core cooling.

Pressurizing circuit 11 maintains the pressure of the deuterium oxide, or the mixture thereof, at a value of approximately $3.45 \cdot 10^5$ to $5.52 \cdot 10^5$ Pa (50 to 80 psi) below the pressure of the reactor coolant. The lower pressure of the low neutron moderating fluid minimizes leakage of the same into the primary reactor coolant system. It is equally important to maintain the pressure of the low neutron moderating fluid as high as possible to maintain a subcooled condition within the moderator control tubes so as to absolutely minimize the flow rate of the deuterium oxide within recirculation circuit 10. The optimum operating pressure of the moderator control system is approximately $3.45 \cdot 10^5$ Pa (50 psi) below the pressure of the reactor coolant system. Pressurizer circuit 11 is utilized for this purpose. Throttling orifice 27 is used to assure a pressure lower than the optimum lower operating pressure of the deuterium oxide, or a mixture thereof. In this manner, the pressurizing circuit 11 controls the pressure. A portion of the low neutron moderating fluid is diverted from line 24 through a motor-operated block valve 35 into pressurizer tank 36 which is pressure controlled by cooler 37. Cooler 37 is cooled by component coolant water by means of line 38 and valve 39. Output from pressurizer tank 36 flows through line 40 through valve 41 back into line 28 downstream of orifice 27.

Purification circuit 12, as previously stated, maintains the purity of the deuterium oxide or a mixture thereof flowing through recirculation circuit 10. Purification circuit 12 uses the head created by recirculation pump 26 to flow a desired portion of the flow within recirculation circuit 10 through valve 45, through a regenerative heat exchanger 46 and through a purification cooler 47 with the former being cooled by filtered low neutron moderating fluid and the latter by component cooling water. Upon exiting cooler 47, the fluid is passed through a filter 48 and parallel arranged ion exchange columns 49. The now purified fluid enters the shell side of heat exchanger 46 where it is regeneratively heated prior to flowing through valve 50 into the suction port of pump 26. It is to be noted that purification circuit 12 provides for continuous purification of a portion of the flow through recirculation circuit 10 with valve 45 providing flow rate control. Valve 51 provides for bypassing of ion exchange columns 49.

Letdown system 13 provides for removal of all or a portion of the low neutron moderating fluid from the moderator control tubes within the nuclear core. Such removal may be for purposes of dilution of the deuterium oxide with reactor coolant (light water) as during the eleventh month of the fuel cycle example previously noted or for after complete removal of the low concentration deuterium oxide mixture following the seventeenth month of the fuel cycle. Letdown circuit 13 interfaces with purification circuit 12 at the outlet of ion exchange columns 49. In this instance, valve 55 is closed while valves 56 are open permitting the fluid to flow into storage tanks 59. Throttling orifices 57 and throttling valves 58 successively reduce the pressure from that of the recirculating circuit 10 to that of the storage tanks 59.

Upgrader circuit 14 receives a mixture of deuterium oxide and light water in various concentrations and then upgrades the incoming mixture to a desired purity or concentration. Upgraders of the type illustrated comprising a packed rectification column are known in the art having been used in the Canadian heavy water reactors. The flow circuit associated with the upgrader circuit 14 is, however, within the scope of the invention herein. Upgrader circuit 14 interfaces at the inlet end with letdown circuit 13 and at its outlet end with the feed/makeup circuit 15.

A mixture of deuterium oxide and light water exits from storage tanks 59 into a feed evaporator 65 which may be heated by low pressure secondary steam. The vapor from the feed evaporator 65 flows into upgrader column 66 through line 67. The vapor from feed evaporator 65 rises to the head 68 of column 66 where it is condensed as a result of the component coolant water flowing therethrough and then flows back down column 66 to the bottom sump 69. A portion of the head product is simultaneously drawn off through line 70, cooled in heat exchanger 71 and stored in head product storage tank 72 for use as a diluent for pure deuterium oxide during the later stage of the next fuel cycle. The bottom product, comprising high purity deuterium oxide, is transferred by pump 73 through line 74, cooler 75 into bottom storage tank 76 for temporary storage and for subsequent use during the early stage of the next fuel cycle. A portion of the bottom product is continuously cycled by pump 73 through line 77, evaporator 78 and back into sump 69 for purposes of maintaining the purity of the bottom product within column 66.

The final portion of the inventive system comprises the feed/makeup circuit 15 which makes up for any lost inventory of deuterium oxide within recirculation circuit 10. In this mode of operation, either pure deuterium oxide or the diluent or a combination thereof is drawn from tanks 72 and 76 through valves 85 and 86 to the suction port of pump 87 which flows the moderator control fluid through motor valve 88, check valve 89 and into recirculation circuits 10A and 10B through valves 45. The above-described system may be automatically controlled or controlled by the reactor-operating personnel. In either event, certain critical parameters must be closely watched. The pressure and temperature of the deuterium oxide and mixtures thereof could be closely monitored. This can be accomplished manually by use of a Barringer concentration analyzer or other similar device. By specifically pointing out the above-noted parameters, it is not intended to imply that all the remaining parameters associated with the control system are not important or necessary. Proper functioning and monitoring of the entire system is essential.

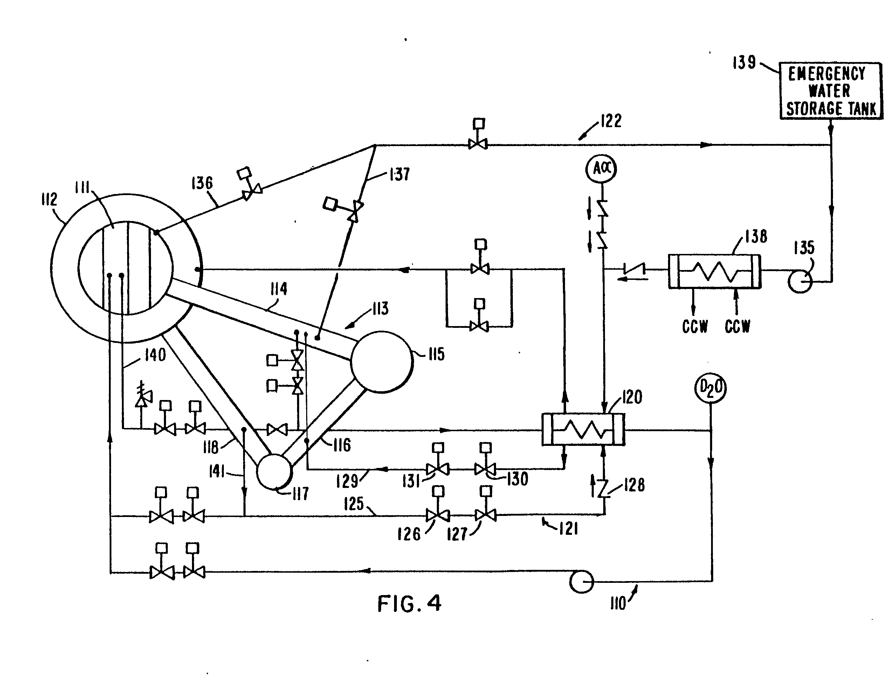

Figure 4 illustrates another embodiment of the inventive fluid moderator control system. In this embodiment, the recirculation circuit 110 is essentially unchanged from the previously described embodiment. The associated pressurizer circuit, purification circuit, letdown circuit, upgrader circuit and the feed/makeup circuit are not shown for purposes of clarity. It is, of course, to be understood that such circuits are necessary for proper and complete functioning of the system. For further purposes of simplicity of description and explanation, only one recirculation circuit 110 associated with one core quadrant 111 is shown. A reactor pressure vessel 112 is connected to a primary loop 113 which includes hot leg piping 114, steam generator 115, cross over piping 116, main coolant pump 117 and cold leg piping 118.

The shell side of fluid moderator heat exchanger 120 is flow connected to a primary coolant circuit 121 and to an emergency core coolant and decay heat removal circuit 122.

During normal reactor operation, recirculation circuit operates normally as previously explained. In this embodiment, however, the heat removed by heat exchanger 120 is utilized to heat primary coolant. Flow from the cold leg piping 118 passes through line 125 which contains two series connected motor operated block valves 126 and 127 and check valve 128. The bypassed primary coolant flow is heated by the heat rejected from the deuterium oxide, or a mixture thereof, in heat exchanger 120. The now heated bypassed primary coolant flow passes within line 129, containing valves 130 and 131 prior to being returned to the cross over piping leg 116. The pressure head created by main coolant pump 117 provides the driving pressure to accomplish the bypass reactor coolant flow.

The emergency core coolant and decay heat removal circuit 122 functions to provide decay heat removal during such times as there is little or no primary coolant flow through the primary system of the reactor, and to provide energy core cooling following a loss-of-coolant accident. A high pressure head pump 135 is arranged to take suction from the reactor coolant system upper plenum through line 136, or the hot leg through line 137 and deliver the same to the tube side of a RHR (residual heat removal) heat exchanger 138, through the shell side of recirculation heat exchanger 120 and into the reactor vessel 112 downcomer region. Energy is thus rejected from circuit 110 to the reactor coolant via the recirculation heat exchanger 120 and the RHR heat exchanger 138. Component cooling water may be used in the shell side of heat exchanger 138 which may then reject the decay heat energy to service system water and ultimately to the main heat sink such as a river, lake or the like.

Circuit 122 as stated may also be used to provide emergency core cooling. In this mode of operation, pump 135 would take suction from an emergency water storage tank 139 and channel this coolant through the shell side of recirculation heat exchanger 120 and into the reactor vessel 112 downcomer region. The operating recirculation circuit 110 would, of course, be used in removing heat from the core.

Should it be desired not to use recirculation circuit 110 for fluid moderator control purposes, the hot flow from line 140 which may comprise reactor coolant may be injected into the hot leg piping 114, while the cold flow line would be fed from line 141 from cold leg 118. The differential pressure across main coolant pump 117 would provide this circuit with the necessary driving force.

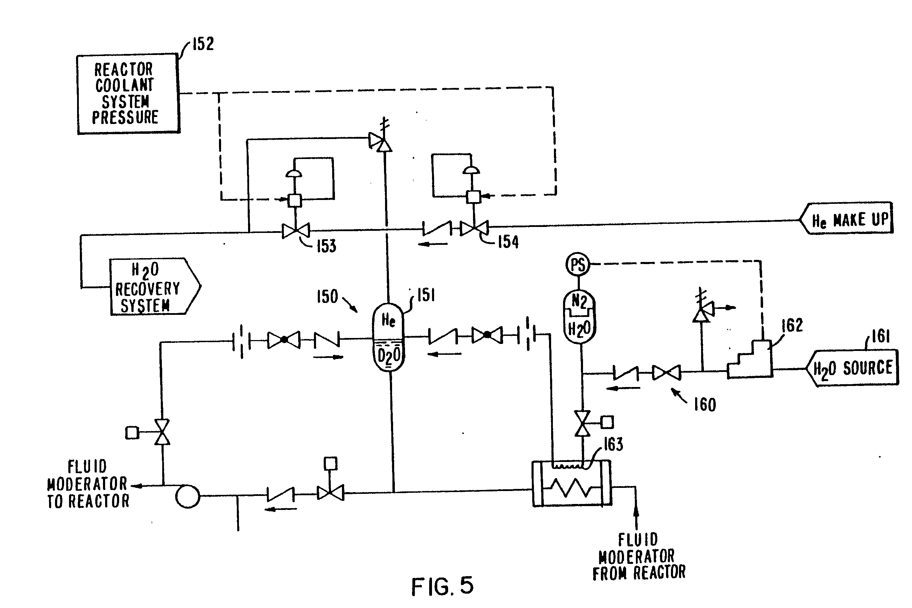

An alternate pressurizing circuit for the inventive fluid moderator control system may comprise a circuit 150 such as that shown in Figure 5. In this alternative, the fluid moderator pressure is controlled by a surge tank 151 having an inert gas blanket such as helium over a liquid level of deuterium oxide in combination with pressure control valves. A pressure input signal from the reactor coolant system 152 is utilized by two air-operated pressure control valves 153 and 154 to track any fluctuation in the reactor coolant system pressure and maintains a desired pressure within the recirculation system 10 or 110 which is partially shown in Figure 5.

Figure 5 also illustrates an alternate method of diluting the high purity deuterium oxide to achieve the low concentration mixture required during the later state of the fuel cycle. In this embodiment, the diluent circuit 160 interfaces with recirculation circuit 10 or 110 at surge tank 151. Light water is injected into surge tank 151 by means of a positive displacement pump 162 coupled to a light water supply source 161. The light water diluent is preheated in the shell side 163 of the recirculation heat exchanger prior to being introduced into surge tank 151.

In accordance with the above-description, taken in conjunction with the accompanying drawings, a fluid moderator control system is provided, which provides for a uniform high purity of a low neutron moderating fluid within the core of a nuclear reactor during the early stage of the fuel cycle and which provides for a desired low concentration of the low neutron moderating fluid within the core during the later stage of the fuel cycle to permit a fluid moderator spectral shift.

## Claims

1. In a nuclear reactor having in a pressure vessel a core structure with tubes incorporated therein for receiving different fluids for purposes of spectral shift, a control system for controlling the supply of fluid to said tubes, characterized by means (10A, 10B) for circulating said fluids to and from said pressure vessel; means (11) for pressurizing the fluids in said circulation means (10A, 10B) to maintain a predetermined fluid pressure; means (15) for supplying a moderator fluid to said circulation means (10A, 10B); means (12) for removing said moderator fluid from said circulation means (10A, 10B); and means (14, 15) for varying the concentration of said fluids supplied to said circulation means.

2. A system according to claim 1, characterized in that said circulation means (10A, 10B) has at least one flow loop (10A), external of the pressure vessel (20), comprising an outlet flow line (24), a heat exchanger (25), a circulation pump (26), means (27) for throttling the pressure of said fluid moderator, and an inlet flow line (28), said outlet line (24), heat exchanger (25), circulation pump (26), throttling means (27) and inlet line (28) being series connected to each other.

3. A system of claim 2, characterized in that said fluids are mixtures of deuterium oxide and light water.

4. A system according to claim 2 or 3, characterized in that means (14) are provided for increasing the concentration of the deuterium oxide in the fluid moderator mixture removed from the circulation means (10A, 10B).

5. A system according to claim 2, 3 or 4, characterized in that said throttling means comprises a pressure throttling flow orifice (27) connected to said circulation flow loop (10A) downstream of said throttling means and said pressurizing means (11) comprises a flow circuit having an inlet line connected to the circulation loop outlet line (24) and an outlet line connected to the circulation loop inlet line (28) and a heater interposed between said inlet and outlet lines.

6. A system according to claim 5, characterized in that said pressurizing means (11) is adapted to maintain the pressure of said fluid moderator at an approximate level of 350 kPa less than that of the reactor coolant.

7. A system according to any of claims 2—6, characterized in that said pressurizing means comprises a pressurizing circuit (11) comprising an inlet line connected upstream of said pump (26) and an outlet line connected downstream of said pump (26) with a surge tank interposed therebetween, said surge tank having fluid moderator therein with an inert gas blanketed over said fluid moderator, said inert gas being flow connected to a pressure control valve (39) receiving an input pressure signal from the reactor coolant.

8. A system according to any of claims 2—7, characterized in that a purification means (12) is provided and comprises a flow circuit having an inlet line connected to said circulation circuit inlet line (28) and an outlet line connected upstream of said circulation pump (26) with a heat exchanger (46, 47), a filter (48) and an ion exchange column (49) series connected to each other interposed between said purification inlet and outlet lines.

9. A system according to any of claims 2 to 8, characterized in that said fluid moderator removal means comprises a letdown circuit (13) having an inlet line flow-connected to said circulation circuit (10A, 10B) with a throttling orifice (57) and a throttling valve (58) in series connection between said inlet line and one or more storage tanks (59) for throttling the pressure of said fluid moderator and said one or more storage tanks (59) connected in series to said letdown inlet line.

10. A system according to any of claims 2 to 9, characterized in that said moderator supplying means (15) comprises a source of fluid moderator, a makeup pump (87) and an outlet line in series flow connection with said outlet line being connected to said one or more circulation flow loops (10A, 10B), and said concentration varying means comprises a source of substantially pure deuterium oxide (76) and a source of a mixture of deuterium oxide and light water (72), said mixture having a low concentration of deuterium oxide, said high and low concentration sources being parallel connected to an inlet of said makeup pump (87) with a valve (85, 86) interposed between each of said sources (72, 76) and said pump (87).

11. A system according to claim 4, characterized in that said concentration increasing means (14) comprises a flow circuit having an inlet line (67), a vaporizer (65), a deuterium oxide upgrader column (66), an upgrader pump (73), a high concentration storage tank (76) and an outlet line, in series connection with each other and with the inlet line (67) being flow connected to said removal means (55—59) and with the outlet line being flow connected to supplying means (72, 76), said concentration means (14) further comprising a flow line connecting a low concentration end (68) of said upgrader column (66) with said low concentration storage tank (72) being flow connected to said supplying means (15) in parallel with said high concentration storage tank (76).

12. A system according to any of claims 2 to 11, characterized by means for flow connecting the circulation loop heat exchanger (25) to the reactor coolant primary system comprising a flow line connecting the reactor coolant cold leg piping with the inlet to the shell side of said heat exchanger (25) and a flow line connecting the outlet from the said heat exchanger (25) to the crossover leg of the reactor coolant primary system (10A, 10B).

13. A system according to any of claims 2 to 12, characterized by means for providing emergency core cooling comprising a flow circuit having a source (139) of emergency core coolant water, a pump (117), a heat exchanger (120) and an outlet flow line series connected to each other and to the downcomer channel within the reactor vessel (112), with the shell side of the circulation heat exchanger (120) being interposed between the outlet of said emergency cooling heat exchanger (120) and the outlet line connected to the downcomer channel.

14. A system according to any of claims 2 to 13, characterized by means for removing decay heat from said reactor comprising a flow circuit having an inlet line (136, 137) connected to hot reactor coolant and an outlet line connected to the downcomer channel in the pressure vessel (112), with a pump (135), a heat exchanger (138) and the shell side of the circulation circuit heat exchanger (120) series connected to each other and interposed between said inlet and outlet lines.

15. A system according to claim 14, characterized in that said inlet line is connected to the reactor vessel adjacent the upper plenum of the reactor vessel (112).

16. A system according to claim 14, characterized in that said inlet line is connected to the hot leg pipe (114) of the reactor coolant primary system.

**Patentansprüche**

1. In einem Kernreaktor, der in einem Druckbehälter einen Kernaufbau mit darin eingebauten Rohren zum Aufnehmen verschiedener Flüssigkeiten zu Zwecken spektraler Verschiebung aufweist, ein vorgesehenes Regelsystem zum Regeln der Zufuhr von Flüssigkeit zu den Rohren, gekennzeichnet durch eine Einrichtung (10A, 10B) zum Umwälzen der Flüssigkeiten zu und von dem Druckbehälter, eine Einrichtung (11) zum Aufbauen eines Druckes der Flüssigkeiten in der Umwälzeinrichtung (10A, 10B) zum Aufrechterhalten eines vorbestimmten Flüssigkeitsdruckes, eine Einrichtung (15) zum Zuführen einer Moderatorflüssigkeit zu der Umwälzeinrichtung (10A, 10B), eine Einrichtung (12) zum Entfernen der Moderatorflüssigkeit aus der Umwälzeinrichtung (10A, 10B) und Einrichtungen (14, 15) zum Ändern der Konzentration der der Umwälzeinrichtung zugeführten Flüssigkeiten.

2. System nach Anspruch 1, dadurch gekennzeichnet, daß die Umwälzeinrichtung (10A, 10B) mindestens eine Strömungsschleife (10A) außerhalb des Druckbehälters (20) aufweist, die eine Auslaßströmungsleitung (24), einen Wärmeaustauscher (25), eine Umwälzpumpe (26), eine Einrichtung (27) zum Drosseln des Druckes des flüssigen Moderators und eine Einlaßströmungsleitung (28) umfaßt, wobei die Auslaßleitung (24), der Wärmeaustauscher (25), die Umwälzpumpe (26), die Drosseleinrichtung (27) und die Einlaßleitung (28) in Reihenanordnung miteinander verbunden sind.

3. System nach Anspruch 2, dadurch gekennzeichnet, daß die Flüssigkeiten Mischungen aus Deuteriumoxid und leichtem Wasser sind.

4. System nach Anspruch 2 oder 3, dadurch gekennzeichnet, daß Einrichtungen (14) zum Erhöhen der Konzentration des Deuteriumoxids in der aus der Umwälzeinrichtung (10A, 10B) entfernten flüssigen Moderatormischung vorgesehen sind.

5. System nach Anspruch 2, 3 oder 4, dadurch gekennzeichnet, daß die Drosseleinrichtung einen druckdrosselnden Strömungsdurchlaß (27) umfaßt, der mit der Umwälzströmungsschleife (10A) stromabwärts der Drosseleinrichtung verbunden ist, und die Druckaufbaueinrichtung (11) einen Strömungskreislauf umfaßt, der eine mit der Umwälzschleifenauslaßleitung (24) verbundene Einlaßleitung und eine mit der Umwälzschleifeneinlaßleitung (28) verbundene Auslaßleitung und eine zwischen diesen Einlaß- und Auslaßleitungen eingesetzte Heizeinrichtung aufweist.

6. System nach Anspruch 5, dadurch gekennzeichnet, daß die Druckaufbaueinrichtung (11) zum Aufrechterhalten des Druckes des flüssigen Moderators bei einem ungefähren Pegel, der 350 kPa unterhalb dem des Reaktorkühlmittels liegt, ausgelegt ist.

7. System nach einem der Ansprüche 2 bis 6, dadurch gekennzeichnet, daß die Druckaufbaueinrichtung einen Druckaufbakreislauf (11) umfaßt, der eine stromaufwärts der Pumpe (26) angeschlossene Einlaßleitung und eine stromabwärts der Pumpe (26) angeschlossene Auslaßleitung mit einem dazwischen eingesetzten Puffertank umfaßt, wobei sich im Puffertank ein flüssiger Moderator mit einem den flüssigen Moderator überdeckenden Inertgas befindet, das in Strömungsverbindung mit einem Drucksteuerventil (39) steht, das ein Eingangsdrucksignal von dem Reaktorkühlmittel erhält.

8. System nach einem der Ansprüche 2 bis 7, dadurch gekennzeichnet, daß eine Reinigungseinrichtung (12) vorgesehen ist und einen Strömungskreislauf umfaßt, der eine an die Umwälzkreislaufeinlaßleitung (28) angeschlossene Einlaßleitung und eine stromaufwärts der Umwälzpumpe (26) angeschlossene Auslaßleitung, mit einem Wärmeaustauscher (46, 47), einem Filter (48) und einer Ionenaustauschersäule (49), die in Reihe miteinander verbunden und zwischen der Reinigungseinlaßleitung und -auslaßleitung eingesetzt sind, aufweist.

9. System nach einem der Ansprüche 2 bis 8, dadurch gekennzeichnet, daß die Moderatorflüssigkeitsentfernungseinrichtung einen Entspannungskreislauf (13), der eine mit dem Umwälzkreislauf (10A, 10B) strömungsleitend verbundene Einlaßleitung aufweist, mit einem Drosseldurchlaß (57) und einem Drosselventil (58), die in Reihenanordnung zwischen der Einlaßleitung und einem oder mehreren Speichertanks (59) zum Drosseln des Druckes des flüssigen Moderators und des oder der in Reihe mit der Entspannungseinlaßleitung verbundenen Speichertanks (59) verbunden sind, umfaßt.

10. System nach einem der Ansprüche 2 bis 9, dadurch gekennzeichnet, daß die Moderatorzuführeinrichtung (15) eine Quelle des flüssigen Moderators, eine Nachschubpumpe (87) und eine Auslaßleitung in strömungsleitender Reihenverbindung umfaßt, wobei diese Auslaßleitung mit der oder mehreren Umwälzströmungsschleifen (10A, 10B) verbunden ist und die Konzentrationsänderungseinrichtungen eine Quelle von im wesentlichen reinem Deuteriumoxid (76) und eine Quelle einer Mischung aus Deuteriumoxid und leichtem Wasser (72) mit einer niedrigen Konzentration des Deuteriumoxids umfaßt, wobei die für die hohe und die niedrige Konzentration vorgesehenen Quellen parallel zueinander an einen Einlaß der Nachschubpumpe (87) mit einem zwischen jeder Quelle (72, 76) und der Pumpe (87) eingesetzten Ventil (85, 86) angeschlossen sind.

11. System nach Anspruch 4, dadurch gekennzeichnet, daß die Konzentrationserhöhungseinrichtung (14) einen Strömungskreislauf mit einer Einlaßleitung (67), einen Verdampfer (65), eine Deuteriumoxidaufbereitungssäule (66), eine Aufbereitungspumpe (76), einen Hochkonzentrationsspeichertank (76) und eine Auslaßleitung in Reihenanordnung miteinander verbunden umfaßt, wobei die Einlaßleitung (67) strömungsdurchlassend mit der Entfernungseinrichtung (55 bis 59) verbunden und die Auslaßleitung mit der Zuführeinrichtung (72, 76) strömungsleitend verbunden ist, und die Konzentrationseinrichtung (14) zusätzlich eine Strömungsleitung umfaßt, die ein Niedrigkonzentrationsende (68) der Aufbereitungssäule (66) mit dem Niedrigkonzentrationsspeichertank (72) verbindet, der parallel zum Hochkonzentrationsspeichertank (76) strömungsleitend mit der Zuführeinrichtung (15) verbunden ist.

12. System nach einem der Ansprüche 2 bis 11, gekennzeichnet durch eine Einrichtung zum strömungsleitenden Verbinden des Umwälzschleifenwärmeaustauschers (25) mit dem primären Reaktorkühlmittelsystem, die eine Strömungsleitung, die die Reaktorkühlmittelkaltrohrleitung mit dem Einlaß zur Mantelgehäuseseite des Wärmeaustauschers (25) verbindet, und eine Strömungsleitung, die den Auslaß des Wärmeaustauschers (25) mit der Übergangsleitung des primären Reaktorkühlmittelsystems (10A, 10B) verbindet, umfaßt.

13. System nach einem der Ansprüche 2 bis 12, gekennzeichnet durch eine Einrichtung zum Vorsehen einer Notkühlung des Kerns, die einen Strömungskreislauf mit einer Quelle (139) von Notkühlwasser für den Kern, eine Pumpe (117), einen Wärmeaustauscher (120) und eine Auslaßströmungsleitung umfaßt, die in Reihenanordnung miteinander und dem Fallkanal innerhalb des Reaktorbehälters (112) verbunden sind, wobei die Mantelgehäuseseite des Kreislaufwärmeaustauschers (120) zwischen dem Auslaß des Notkühlungswärmeaustauschers (120) und der mit dem Fallkanal verbundenen Auslaßleitung eingesetzt ist.

14. System nach einem der Ansprüche 2 bis 13, gekennzeichnet durch eine Einrichtung zum Entfernen von Abwärme aus dem Reaktor, die einen Strömungskreislauf mit einer mit heißem Reaktorkühlmittel verbundenen Einlaßleitung (136, 137) und eine mit dem Fallkanal im Druckbehälter (112) verbundenen Auslaßleitung umfaßt, wobei eine Pumpe (135), ein Wärmeaustauscher (138) und die Mantelgehäuseseite des Umwälzkreislaufwärmeaustauschers (120) in Reihenanordnung miteinander verbunden und zwischen den Einlaß- und Auslaßleitungen eingesetzt sind.

15. System nach Anspruch 14, dadurch gekennzeichnet, daß die Einlaßleitung angrenzend an den oberen gefüllten Raum des Reaktorbehälters (112) mit dem Reaktorbehälter verbunden ist.

16. System nach Anspruch 14, dadurch gekennzeichnet, daß die Einlaßleitung mit dem Heißrohr (114) des primären Reaktorkühlmittelsystems verbunden ist.

**Revendications**

1. Dans un réacteur nucléaire ayant dans une cuve sous pression une structure de coeur comportant des tubes pour recevoir des fluides différentes à des fins de déplacement spectral, un système de commande pour commander l'alimentation en fluide desdits tubes, caractérisé par un moyen (10A, 10B) pour faire circuler lesdits fluides jusqu'à et depuis ladite cuve sous pression, un moyen (11) pour mettre sous pression les fluides dans ledit moyen de circulation (10A, 10B) afin de maintenir une pression prédéterminée des fluides; un moyen (15) pour fournir un fluide modérateur audit moyen de circulation (10A, 10B); un moyen (12) pour retirer ledit fluide modérateur dudit moyen de circulation (10A, 10B); et des moyens (14, 15) pour faire varier la concentration desdits fluides fournis audit moyen de circulation.

2. Système selon la revendication 1, caractérisé en ce que ledit moyen de circulation (10A, 10B) a au moins une première boucle de circulation (10A), extérieure à la cuve (20) sous pression, comprenant une conduite (24) de sortie, un échangeur (25) de chaleur, une pompe (26) de circulation, un moyen d'étranglement (27) et une conduite (28) d'entrée, montés en série les uns par rapport aux autres.

3. Système selon la revendication 2, caractérisé en ce que lesdits fluides sont des mélanges d'oxyde de deutérium et d'eau ordinaire.

4. Système selon la revendication 2 ou 3, caractérisé en ce que des moyens (14) sont présents pour accroître la concentration de l'oxyde de deutérium dans le mélange de fluides modérateurs retiré du moyen de circulation (10A, 10B).

5. Système selon la revendication 2, 3 ou 4, caractérisé en ce que ledit moyen d'étranglement comporte un orifice (27) d'étranglement de circulation sous pression relié à ladite boucle de circulation (10A) en aval dudit moyen d'étranglement, et en ce que ledit moyen (11) de mise sous pression comporte un circuit d'écoulement ayant une conduite d'entrée reliée à la conduite de sortie (24) de la boucle de circulation et une conduite de sortie reliée à la conduite d'entrée (28) de la boucle de circulation et un réchauffeur intercalé entre lesdites conduites d'entrée et de sortie.

6. Système selon la revendication 5, caractérisé en ce que ledit moyen de mise sous pression (11) est conçu pour maintenir la pression dudit fluide modérateur à un niveau approximatif de 350 kPa inférieur à celui du réfrigérant du réacteur.

7. Système selon l'une quelconque des revendications 2 à 6, caractérisé en ce que ledit moyen de mise sous pression comprend un circuit (11) de mise sous pression comportant une conduite d'entrée reliée en amont de ladite pompe (26) et une conduite de sortie reliée en aval de ladite pompe (26) avec un réservoir tampon intercalé entre celles-ci, ledit réservoir tampon contenant un fluide modérateur sur lequel se trouve une couverture de gaz inerte, ledit gaz inerte étant relié, pour circuler, à une soupape (39) de réglage de pression recevant du réfrigérant du réacteur un signal de pression d'entrée.

8. Système selon l'une quelconque des revendications 2 à 7, caractérisé en ce qu'un moyen d'épuration (12) est présent et comporte un circuit d'écoulement ayant une conduite d'entrée reliée à ladite conduite (28) d'entrée du circuit de circulation, et une conduite de sortie reliée en amont de ladite pompe de circulation (26), avec un échangeur (46, 47) de chaleur, un filtre (48) et une colonne (49) pour échanges d'ions en série les uns par rapport aux autres et intercalés entre lesdites conduites d'entrée et de sortie d'épuration.

9. Système selon l'une quelconque des revendications 2 à 8, caractérisé en ce que ledit moyen d'enlèvement de fluide modérateur comprend un circuit de soutirage (13) ayant une conduite d'entrée reliée pour établir un écoulement audit circuit de circulation (10A, 10B), avec un orifice d'étranglement (57) et une valve d'étranglement (58) montés en série entre ladite conduite d'entrée et un ou plusieurs réservoirs de stockage (59) pour réduire la pression dudit fluide modérateur et dudit ou desdits réservoirs de stockage (59) reliés en série à ladite conduite d'entrée de soutirage.

10. Système selon l'une quelconque des revendications 2 à 9, caractérisé en ce que ledit moyen (15) d'alimentation en modérateur comporte une source de fluide modérateur, une pompe d'appoint (87) et une conduite de sortie reliées en série pour établir un écoulement, ladite conduite de sortie étant reliée à ladite ou auxdites boucles de circulation (10A, 10B), et ledit moyen faisant varier la concentration comprend une source d'oxyde de deutérium sensiblement pur (76) et une source d'un mélange d'oxyde de deutérium et d'eau ordinaire (72), ledit mélange ayant une faible concentration d'oxyde de deutérium, lesdites sources à forte et faible concentration étant reliées en parallèle à une entrée de ladite pompe d'appoint (87), une valve (85, 86) étant intercalée entre chacune desdites sources (72, 76) et ladite pompe (87).

11. Système selon la revendication 4, caractérisé en ce que ledit moyen (14) faisant augmenter la concentration comprend un circuit d'écoulement ayant une conduite d'entrée (67), un pulvérisateur (65), une colonne (66) d'enrichissement en oxyde de deutérium, une pompe d'enrichissement (73), un réservoir (76) de stockage à forte concentration et une conduite de sortie, en série les uns avec les autres, la conduite d'entrée (67) établissant une circulation avec le moyen d'enlèvement (55—59), et la conduite de sortie établissant une circulation avec le moyen d'alimentation (72, 76), ledit moyen de concentration (14) comportant en outre une conduite d'écoulement reliée à une extrémité (18) à faible concentration de ladite colonne d'enrichissement (66), ledit réservoir (72) de stockage à faible concentration communiquant avec ledit moyen d'alimentation (15) en parallèle avec ledit réservoir (76) de stockage à forte concentration.

12. Système selon l'une quelconque des revendications 2 à 11, caractérisé par un moyen pour faire communiquer l'échangeur (25) de chaleur de la boucle de circulation avec le circuit primaire de refroidissement du réacteur, comportant une conduite d'écoulement reliant les tuyauteries de la branche froide de refroidissement du réacteur à l'entrée du côté virole de l'échangeur de chaleur (25), une conduite reliant la sortie dudit échangeur de chaleur (25) à la branche de croisement du circuit primaire de refroidissement (10A, 10B) du réacteur.

13. Système selon l'une quelconque des revendications 2 à 12, caractérisé par un moyen pour réaliser un refroidissement d'urgence du coeur comprenant un circuit d'écoulement ayant une source (139) d'eau de refroidissement d'urgence du coeur, une pompe (117), un échangeur (120) de chaleur et une conduite de sortie montés en série les uns avec les autres et avec le conduit descendant situé dans la cuve (112) de réacteur, le côté virole de l'échangeur (120) de chaleur de circulation étant intercalé entre la sortie dudit échangeur (120) de chaleur pour refroidissement d'urgence et la conduite de sortie reliée au conduit descendant.

14. Système selon l'une quelconque des revendications 2 à 13, caractérisé par un moyen pour évacuer du réacteur de la chaleur de désintégration, comprenant un circuit d'écoulement ayant une conduite d'entrée (136, 137) reliée à la branche chaude de réfrigérant de réacteur, et une conduite de sortie reliée au conduit descendant situé dans la cuve (112) sous pression, une pompe (135), un échangeur (138) de chaleur et le côté virole de l'échangeur (120) de chaleur du circuit de circulation étant reliés en série les uns avec les autres et intercalés entre lesdites conduite d'entrée et de sortie.

15. Système selon la revendication 14, caractérisé en ce que ladite conduite d'entrée est reliée à la cuve du réacteur de manière contiguë au plénum supérieur de la cuve (112) du réacteur.

16. Système selon la revendication 14, caractérisé en ce que ladite conduite d'entrée est reliée au tuyau (114) de branche chaude du circuit primaire de refroidissement du réacteur.

FIG. 1

FIG. 2

FIG. 3

EP 0 170 033 B1

FIG. 4

FIG. 5

EP 0 170 033 B1